# EUROPEAN PATENT SPECIFICATION

(11) **EP 1 665 921 B1**
(45) Date of publication and mention of the grant of the patent: **16.04.2008**
(21) Application number: 05110223.4
(22) Date of filing: 01.11.2005
(51) Int. Cl.: A01C 3/04, A01K 1/01

(54) **Manure vehicle**
Fahrzeug zum Verschieben von Mist
Véhicule de déplacement de fumier

(30) Priority: 06.12.2004 NL 1027662
(43) Date of publication of application: 07.06.2006
(73) Proprietor: J.O.Z. Beheer B.V., 1617 KK Westwoud (NL)
(72) Inventor: Elling, Hendrik-Jan, 1617 KK, Westwoud (NL)
(74) Representative: Hooiveld, Arjen Jan Winfried

(56) References cited:
- EP-A- 0 943 235
- WO-A-00/48455
- FR-A- 2 085 478
- US-A- 3 971 091
- US-A1- 2001 035 304

## Description

The invention relates to an unmanned manure vehicle comprising driving means for driving the vehicle and orientation means for following a route. Although the present vehicle is in principle suitable for use indoors as well as outdoors (for example on grasslands), this vehicle is in particular intended for use in a cattle shed. The route to be followed is in the cattle shed in that case.

Such a manure vehicle is known from Dutch patent No. 1 008 612 in the name of the present Applicant. The unmanned manure vehicle that is disclosed therein is a vehicle that moves autonomously in an aisle of the cattle shed, which vehicle is driven via live wire netting installed in the cattle shed, under which the vehicle moves. The supply voltage is taken off by means of a sliding contact against the wire netting. The known manure vehicle is fitted with a manure slide in the form of, for example, a combislide, a folding slide or a slotted slide for moving the manure that is present in the aisle to a desired location in the cattle shed. The vehicle that is known from the aforesaid Dutch patent publication must move according to a route plan, to which end means for determining the position of the vehicle in the cattle shed are provided.

A drawback of the known manure vehicle is the fact that it moves manure to holes formed in a floor of the cattle shed, for example, through which holes the manure can fall into a manure pit present thereunder. On the one hand such holes must be large enough to prevent clogging thereof, whilst on the other hand they must be small enough to keep ammonia emissions from the manure pit within the statutory limits. In addition, emptying the manure pit is a labourious activity, and not every cattle shed has a manure pit.

International patent publication no. WO 00/48455 (Prolion) describes an unmanned manure vehicle according to the preamble of claim 1. A drawback of that known manure vehicle is that in practice still undesirable substances (like ammonia) may be formed and that a separate silo with biologically active substances must be present in order to avoid the formation of said undesirable substances as far as possible.

The object of the invention is to provide an unmanned manure vehicle which is capable of moving autonomously and which obviates the drawbacks of the prior art as described above.

In order to accomplish that object, an unmanned manure vehicle of the kind referred to in the introduction is characterized in that the container comprises drying means for drying manure in the container. By having the unmanned vehicle move autonomously through a cattle shed or over grassland along a predetermined route, manure can be picked up by the pickup means and subsequently be deposited in the container without this merely bing a matter of moving manure, as is the case with the prior art, with all the drawbacks thereof as described above. If the present manure vehicle is intended for operation in a cattle shed, the aforesaid surface will be a floor of the cattle shed. Drying the manure makes the use of biologically active substances unnecessary to avoid the formation of undesirable substances, like ammonia. After said drying, the dried manure can be removed from the container for subsequent processing.

In a preferred embodiment of an unmanned manure vehicle according to the invention, the pickup means comprise a scraping element. The scraping element is in particular a bar scraper.

In another preferred embodiment of an unmanned manure vehicle according to the invention, the unmanned manure vehicle furthermore comprises a conveyor for conveying the manure that has been picked up by the pickup means to the container. Preferably, said conveyor extends at an acute angle to the surface (for example the floor of the cattle shed), so that the manure picked up by the pickup means via the conveyor can be conveyed obliquely upward in the direction of the container. The conveyor in particular comprises an endless conveyor belt, in particular a studded belt or a finger belt, or as an open belt, in particular a grate belt.

In another preferred embodiment of an unmanned manure vehicle according to the invention, the orientation means comprise a receiver for receiving data signals for determining a position of the unmanned manure vehicle in the shed or on the grassland. In particular, the orientation means furthermore comprise a computer including comparator means for comparing a position of the unmanned manure vehicle in the cattle shed or on the grassland with a predetermined route in the cattle shed or on the grassland, wherein the unmanned manure vehicle can be steered along a route in the cattle shed or on the grassland by the computer via the comparator means.

In another preferred embodiment of a manure vehicle according to the invention, the position data signals are GPS signals from a satellite. In another preferred variant, the position data signals are signals from a transmitter near the surface (for example the floor or a wall of the cattle shed).

In another preferred embodiment of a manure vehicle according to the invention, the unmanned manure vehicle comprises a bumper that surrounds the unmanned manure vehicle at least partially.

In another preferred embodiment of the manure vehicle according to the invention, the driving means comprise an electric motor.

The invention will now be explained in more detail with reference to a figure illustrated in a drawing, which schematically shows the present unmanned manure vehicle in perspective view in a cattle shed.

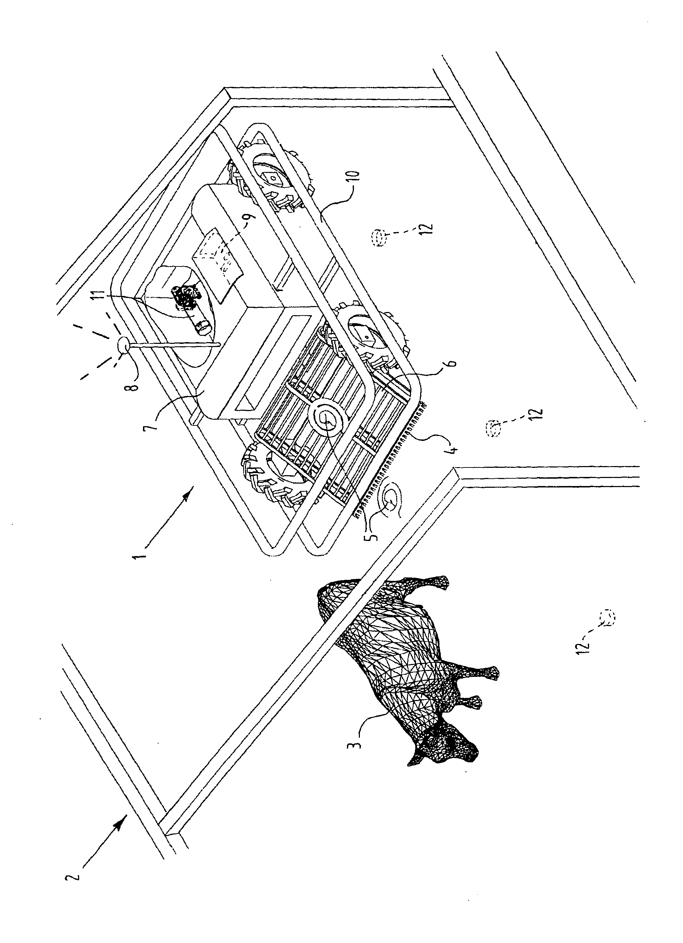

The figure shows an unmanned manure vehicle 1 according to the invention, which moves through a shed 2 in which cows 3 are present. The manure vehicle 1 comprises pickup means in the form of a bar scraper 4 for scraping cow manure 5 from the ground in the direction of conveying means in the form of an endless conveyor belt 6. Said conveyor belt 6 is driven by rollers (not shown). Manure 5 that has been scraped from the ground is thus conveyed from the bar scraper 4, via the conveyor belt 6, in the direction of a container or tank 7. Once the manure 5 has arrived in the tank 7, it is dried and subsequently removed from the tank 7.

The position of the unmanned manure vehicle 1 is determined on the basis of GPS signals transmitted by satellite, to which end the manure vehicle 1 is provided with at least one receiver 8. Subsequently, a computer 9 compares the position of the manure vehicle 1 that has thus been determined with a predetermined route through the shed 2 that is loaded in the computer. Finally, the computer 9 steers the manure vehicle 1 along a predetermined route through the shed 2 on the basis of said comparison. The manure vehicle 1 moves autonomously through the shed 2, therefore. As the figure shows, a bumper 10 is mounted around the manure vehicle 1 in case the manure vehicle 1 should bump against a cow 3. Damage to the manure vehicle 1 and/or injury to the cow 3 is prevented in this manner. The manure vehicle 1 is driven by an electric motor 11.

The invention is not limited to the embodiment that is shown herein, but it also extends to other variants that fall within the scope of the appended claims. Thus it will be apparent to those skilled in the art that instead of using GPS signals it is also possible to use signals from transmitters 12 near a floor and/or walls of the shed 2 for determining the position of the manure vehicle 1 in the shed 2.

## Claims

1. An unmanned manure vehicle (1) comprising driving means for driving the vehicle (1) and orientation means for following a route, wherein the manure vehicle (1) comprises pickup means for picking up manure (5) from a surface, as well as a container (7) for containing the manure (5) picked up by the pickup means, **characterized in that** the container (7) comprises drying means for drying manure (5) in the container.

2. An unmanned manure vehicle (1) according to claim 1, wherein the pickup means comprise a scraping element.

3. An unmanned manure vehicle (1) according to claim 2, wherein the scraping element is a bar scraper (4).

4. An unmanned manure vehicle (1) according to claim 1, 2 or 3, wherein the unmanned manure vehicle (1) furthermore comprises a conveyor for conveying the manure (5) that has been picked up by the pickup means to the container (7).

5. An unmanned manure vehicle (1) according to claim 4, wherein the conveyor comprises an endless conveyor belt (6).

6. An unmanned manure vehicle (1) according to any one of the preceding claims 1-5, wherein the orientation means comprise a receiver (8) for receiving data signals for determining a position of the unmanned manure vehicle (1).

7. An unmanned manure vehicle (1) according to claim 6, wherein the orientation means furthermore comprise a computer (9) including comparator means for comparing a position of the unmanned manure vehicle (1) with a predetermined route, and wherein the unmanned manure vehicle (1) can be steered along a route by the computer (9) via the comparator means.

8. An unmanned manure vehicle (1) according to claim 6 or 7, wherein said data signals are GPS signals from a satellite.

9. An unmanned manure vehicle (1) according to claim 6 or 7, wherein said data signals are signals from a transmitter near the surface.

10. An unmanned manure vehicle (1) according to any one of the preceding claims 1-9, wherein the unmanned manure vehicle (1) comprises a bumper (10) that surrounds the unmanned manure vehicle (1) at least partially.

11. An unmanned manure vehicle (1) according to any one of the preceding claims 1-10, wherein the driving means comprise an electric motor (11).

## Patentansprüche

1. Unbemanntes Dungfahrzeug (1), umfassend Antriebsmittel zum Antreiben des Fahrzeugs (1) und Ausrichtungsmittel zum Folgen einer Route, wobei das Dungfahrzeug (1) ein Aufnahmemittel zum Aufnehmen von Dung (5) von einer Oberfläche sowie einen Behälter (7) zur Aufbewahrung des vom Aufnahmemittel aufgenommenen Dungs (5) umfasst, **dadurch gekennzeichnet, dass** der Behälter (7) Trocknungsmittel zum Trocken von Dung (5) im Behälter umfasst.

2. Unbemanntes Dungfahrzeug (1) nach Anspruch 1, bei dem das Aufnahmemittel ein Schaberelement umfasst.

3. Unbemanntes Dungfahrzeug (1) nach Anspruch 2, bei dem das Schaberelement eine Schabeleiste (4) ist.

4. Unbemanntes Dungfahrzeug (1) nach Anspruch 1, 2 oder 3, wobei das unbemannte Dungfahrzeug (1) des Weiteren eine Fördervorrichtung zum Fördern des vom Aufnahmemittel aufgenommen Dungs (5) in den Behälter (7) umfasst.

5. Unbemanntes Dungfahrzeug (1) nach Anspruch 4, bei dem die Fördervorrichtung ein Endlosförderband (6) umfasst.

6. Unbemanntes Dungfahrzeug (1) nach einem der vorhergehenden Ansprüche 1 bis 5, bei dem die Ausrichtungsmittel einen Empfänger (8) zum Empfangen von Datensignalen zum Ermitteln einer Position des unbemannten Dungfahrzeugs (1) umfassen.

7. Unbemanntes Dungfahrzeug (1) nach Anspruch 6, bei dem die Ausrichtungsmittel des Weiteren einen Computer (9) mit einer Komparatoreinrichtung zum Vergleichen einer Position des unbemannten Dungfahrzeugs (1) mit einer vorherbestimmten Route umfassen und wobei das unbemannte Dungfahrzeug (1) über die Komparatoreinrichtung vom Computer (9) entlang einer Route gelenkt werden kann.

8. Unbemanntes Dungfahrzeug (1) nach Anspruch 6 oder 7, bei dem die genannten Datensignale GPS-Signale von einem Satelliten sind.

9. Unbemanntes Dungfahrzeug (1) nach Anspruch 6 oder 7, bei dem die genannten Datensignale Signale von einem Sender in Bodennähe sind.

10. Unbemanntes Dungfahrzeug (1) nach einem der vorhergehenden Ansprüche 1 bis 9, bei dem das unbemannte Dungfahrzeug (1) einen Stoßfänger (10) aufweist, der das unbemannte Dungfahrzeug (1) wenigstens teilweise umgibt.

11. Unbemanntes Dungfahrzeug (1) nach einem der vorhergehenden Ansprüche 1 bis 10, bei dem die Antriebsmittel einen Elektromotor (11) umfassen.

## Revendications

1. Véhicule (1) de déplacement de fumier sans pilote comprenant un moyen d'entraînement pour entraîner le véhicule (1) et un moyen d'orientation pour suivre un itinéraire, dans lequel le véhicule (1) de déplacement de fumier comprend un moyen de ramassage pour ramasser le fumier (5) à partir d'une surface, ainsi qu'un conteneur (7) pour contenir le fumier (5) ramassé par le moyen de ramassage, **caractérisé en ce que** le conteneur (7) comprend un moyen de séchage pour sécher le fumier (5) dans le conteneur.

2. Véhicule (1) de déplacement de fumier sans pilote selon la revendication 1, dans lequel le moyen de ramassage comprend un élément de raclage.

3. Véhicule (1) de déplacement de fumier sans pilote selon la revendication 2, dans lequel l'élément de raclage est un grattoir à barre (4).

4. Véhicule (1) de déplacement de fumier sans pilote selon la revendication 1, 2 ou 3, dans lequel le véhicule de déplacement de fumier sans pilote comprend en outre un convoyeur pour convoyer le fumier (5) ramassé par le moyen de ramassage dans le conteneur (7).

5. Véhicule (1) de déplacement de fumier sans pilote selon la revendication 4, dans lequel le convoyeur comprend une courroie (6) transporteuse sans fin.

6. Véhicule (1) de déplacement de fumier sans pilote selon l'une quelconque des revendications précédentes 1 à 5, dans lequel le moyen d'orientation comprend un récepteur (8) pour recevoir des signaux de données pour déterminer une position du véhicule (1) de déplacement de fumier sans pilote.

7. Véhicule (1) de déplacement de fumier sans pilote selon la revendication 6, dans lequel le moyen d'orientation comprend en outre un ordinateur (9) incluant un moyen de comparaison pour comparer une position du véhicule (1) de déplacement de fumier sans pilote avec un itinéraire prédéterminé, et dans lequel le véhicule (1) de déplacement de fumier sans pilote peut être dirigé le long d'un itinéraire par l'ordinateur (9) via le moyen de comparaison.

8. Véhicule (1) de déplacement de fumier sans pilote selon la revendication 6 ou 7, dans lequel lesdits signaux de données sont des signaux GPS provenant d'un satellite.

9. Véhicule (1) de déplacement de fumier sans pilote selon la revendication 6 ou 7, dans lequel lesdits signaux de données sont des signaux provenant d'un transmetteur près de la surface.

10. Véhicule (1) de déplacement de fumier sans pilote selon l'une quelconque des revendications précédentes 1 à 9, dans lequel le véhicule (1) de déplacement de fumier sans pilote comprend un pare-chocs (10) entourant le véhicule (1) de déplacement de fumier sans pilote, au moins partiellement.

11. Véhicule (1) de déplacement de fumier sans pilote selon l'une quelconque des revendications précédentes 1 à 10, dans lequel le moyen d'entraînement comprend un moteur électrique (11).
